# EUROPÄISCHE PATENTSCHRIFT

(11) **EP 3 741 984 B1**
(45) Veröffentlichungstag und Bekanntmachung des Hinweises auf die Patenterteilung: **03.07.2024**
(21) Anmeldenummer: 20175232.6
(22) Anmeldetag: 18.05.2020
(51) Int. Cl.: F02M 21/02, F02D 19/02, F17C 7/00, B60K 15/03, F02B 19/12, F02B 19/10

(54) **GASMOTOR MIT DRUCKTANKSYSTEM ZUR BEREITSTELLUNG VON GASEN**
GAS ENGINE WITH PRESSURIZED TANK SYSTEM FOR SUPPLYING GASES
MOTEUR À GAZ AVEC UN SYSTÈME DE RÉSERVOIRS PRESSURISÉS POUR LA FOURNITURE DE GAZ

(30) Priorität: 22.05.2019 CH 6772019
(43) Veröffentlichungstag der Anmeldung: 25.11.2020
(73) Patentinhaber: Liebherr Machines Bulle SA, 1630 Bulle (CH)
(72) Erfinder: Dr. Seba, Bouzid, 1632 Riaz (CH); Baert, Michael-Alexandre, 3280 Murten (CH); Andreutti, Roberto, 6917 Barbengo (CH)
(74) Vertreter: Laufhütte, Dieter

(56) Entgegenhaltungen:
- EP-A1- 2 935 849
- WO-A1-2016/115603
- DE-A1-102008 029 493
- DE-A1-102013 214 786
- US-A1- 2011 226 362

## Beschreibung

Die Erfindung betrifft einen Gasmotor mit einem Drucktanksystem zur Bereitstellung von Gasen auf wenigstens zwei unterschiedlichen Druckniveaus, vorzugsweise zur Versorgung eines Verbrennungsmotors mit Brenngasen wie beispielsweise Erdgas (CNG), Wasserstoffgas oder andere Brenngase.

Auch im Bereich der mobilen Arbeitsmaschinen steht die Entwicklung von Gasmotoren im Fokus. Aufgrund ihrer Vorteile kommen hierbei fallweise mit Vorkammer-Zündsystemen ausgestattete Gasmotoren zum Einsatz, einschließlich Gasmotoren mit einer aktiven Vorkammer. In derartigen Gasmotoren ist eine koordinierte Hochdruckeinspritzung von Brenngas mittels eines Hochdruckinjektors mit nachfolgender Zündung des Brenngas-Luft-Gemischs erforderlich, um die Primärzündung auszulösen. Über eine Verbindung zur Hauptbrennkammer gelangt die Zündflamme des in der Vorkammer gezündeten Brenngas-Luft-Gemisches dann in den Hauptbrennraum, wodurch eine vergleichsweise hohe und weitläufig ausgebreitete Zündenergie bereitsteht. Der weitaus größere Energieumsatz erfolgt im Hauptbrennraum. Folglich wird diesem eine weitaus größere Brenngas-Menge zugeführt. Zur Konditionierung des für den Hauptbrennraum benötigten Brenngas-Luft-Gemisches wird das Brenngas in die Saugleitung des Gasmotors eingespritzt. Dem hierfür vorgesehenen Injektor - im Folgenden als Niederdruckinjektor bezeichnet - kann das Brenngas bei einem vergleichsweise diedrigen Druck bereitgestellt werden.

Im Stand der Technik wird derartigen Gasmotoren die Brenngasversorgung der Hochdruckinjektoren und der Niederdruckinjektoren zur Koordinierung des jeweiligen Brenngas-Luft-Gemischs entweder anhand eines einzigen Tanks, der mit sämtlichen Injektoren in Verbindung steht, oder anhand von zwei vollständig getrennten Tanks realisiert, wobei hierbei eine feste Zuordnung von jeweils einem Tank zu einem der beiden Injektortypen besteht. Die Verwendung eines einzigen Tanks hat aber den Nachteil, dass sich die Notwendigkeit eines Nachtankens am höheren Druckniveau orientiert, das für die Vorkammereinspritzung erforderlich ist, sodass ein hoher Anteil der Tankkapazität ungenützt bleibt. Die Verwendung zweier vollständig voneinander getrennter Tanks hat den Nachteil, dass jeder der beiden Tanks einen nach aussen geführten und erreichbaren Anschluss zur Betankung haben muss und eine separate Bbetanktung nötig wird. Das Verbinden und Lösen der Tankvorrichtung an die Einfüllstutzen, ist bei gasförmigen Kraftstoffen langwieriger als für Flüssigkraftstoffe und müsste zweifach erfolgen.

Aus der WO 2016/115603 A1 ist bereits ein Gasmotor mit einem Drucktanksystem bekannt, bei diesem mittels eines Hauttanks Brenngas sowohl an Hochdruckinjektoren zur Direkteinspritzung in eine Hauptbrennkammer als auch an Niederdruckinjektoren zur Saugrohreinspritzung geliefert wird. Fällt der Druckinnerhalb des Haupttanks unter eine notwendiges Druckniveau für die Direkteinspritzung ab, wird das Gas mittels eines Boosters online komprimiert.

Die DE 10 2013 214 786 A1 offenbart ein Tanksystem für die stationäre Lagerung von Benzin, Kerosin oder Brenngas.

Aufgabe der Erfindung ist es, einen Gasmotor mit Drucktanksystem für die Versorgung derartiger Gasmotoren bereitzustellen, das die genannten Nachteile überwindet.

Vor diesem Hintergrund betrifft die Erfindung einen Gasmotor mit Drucktanksystem gemäß Anspruch 1.

Erfindungsgemäß wird ein Übertritt bei Vorliegen einer positiven Druckdifferenz zwischen Haupttank und Nebentank ermöglicht. Eine positive Druckdifferenz zwischen Haupttank und Nebentank liegt vor, wenn der Druck im Haupttank größer als im Nebentank ist. Ein Gasübertritt in die andere Richtung, also vom Nebentank in den Haupttank, wird vom Ventil unterbunden.

Vorzugsweise weist der Haupttank ein größeres Fassungsvolumen auf als der Nebentank. Insbesondere kann das Verhältnis der Fassungsvolumina von Haupttank zu Nebentank mindestens 8 : 2 und vorzugsweise mindestens 9 : 1 betragen. Diese relative Auslegung hat sich insbesondere für die Anwendung des Drucktanksystems zur Brenngas-Versorgung von Gasmotoren, die mit einem aktiven Vorkammerzündsystem ausgestattet sind, als vorteilhaft erwiesen.

In einer Ausführungsform beträgt der maximale Fülldruck der Tanks mindestens 200 bar, vorzugsweise mindestens 350 bar oder 700 bar. Letztere Werte sind deshalb vorteilhaft, weil es sich für die Speicherung von gasförmigem Wasserstoff und Erdgas (CNG) um standardierte Druckniveaus eines vollbetankten Druckspeichers für mobile Anwendungen handelt.

Der Gasmotor umfasst wenigstens einen Zylinder, welcher mit einem aktiven Vorkammerzündsystem ausgestattet ist. Ein solcher Zylinder umfasst einen Hauptbrennraum, der Gasverbindungen zu einer Ansaugleitung, einer Abgasleitung und einer aktiven Vorkammer aufweist. Zwischen einem solchen erfindungsgemäßen Gasmotor und dem Drucktanksystem bestehen dann zwei Gasverbindungen. Das betrifft erstens eine Druckleitung zwischen dem Haupttank und dem Niederdruckinjektor, der das Brenngas in die Ansaugleitung zuführt. Das betrifft zweitens eine Druckleitung zwischen dem Nebentank und den Hochdruckinjektoren, die das Brenngas direkt in die ihr zugeordnete Vorkammer zuführen.

In der Vorkammer ist eine Zündkerze zur Auslösung der Primärzündung eines Brenngas-Luft-Gemischs angeordnet.

Entlang der vom Haupttank und vom Nebentank ausgehenden Gasverbindungen kann jeweils ein Druckminderer angeordnet sein, um das am Nieder- bzw. Hochdruckinjektor ankommende Brenngar auf den dort benötigten Druck zu reduzieren.

Die Erfindung betrifft weiterhin ein Kraftfahrzeug mit einem erfindunsgemäßen Gasmotor, bei dem es sich um ein Land-, Wasser- oder Luftfahrzeug handeln kann. Bei dem Kraftfahrzeug kann es sich insbesondere um eine mobile Arbeitsmaschine oder ein Schiff handeln.

Letztlich betrifft die Erfindung auch ein Verfahren zum Betrieb eines erfindunsgemäßen Gasmotors oder Kraftfahrzeugs, woebi die Zündung des Brenngas-Luft-Gemischs im Brennraum des Gasmotors nicht direkt erfolgt, sondern in einer aktiven Vorkammer, in der ein Teil des im Gasmotor genutzten Brenngas-Luft-Gemischs mittels Gaseinspritzung per Hochdruckinjektor direkt in die Vorkammer eingespritzt wird und dort mit der Zündkerze gezündet wird, wodurch die in der Vorkammer freigesetzte Energie zur Zündung des Brenngas-Luft-Gemisches im Hauptbrennraum zur Verfügung steht.

In einer Ausführungsform wird als Brenngas Wasserstoff eingespritzt.

Die Gaseinspritzung am Niederdruckinjektor erfolgt in einer Ausführungsform bei einem Druck von zwischen 2 und 50 bar, vorzugsweise zwischen 5 und 20 bar und weiter vorzugsweise zwischen 8 und 15 bar. Die Gaseinspritzung am Hochdruckinjektor erfolgt in einer Ausführungsform bei einem Druck von zwischen 100 und 200 bar, vorzugsweise zwischen 150 und 250 bar und weiter vorzugsweise zwischen 180 und 220 bar.

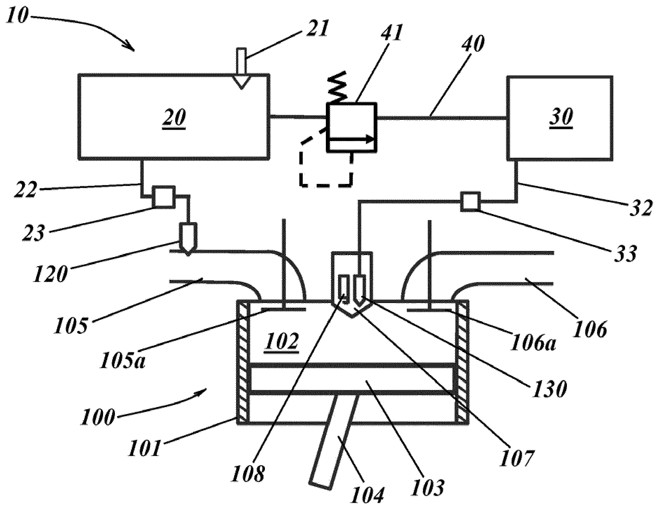

Weitere Einzelheiten und Vorteile der Erfindung ergeben sich aus dem nachfolgend anhand der Figur beschriebenen Ausführungsbeispiel.

Die einzige Figur zeigt eine schematische Darstellung eines Ausschnitts eines Gasmotors 100 und eines assoziierten Drucktanksystems 10 gemäß einem Ausführungsbeispiel der Erfindung. Zur besseren Übersicht zeigt die Figur nur einen einzigen schematisch dargestellten Zylinder.

Der Gasmotor 100 umfasst einen Zylinder 101 mit einem Hauptbrennraum 102, in dem sich ein Kolben 103 auf und ab bewegt und über eine Pleuelstange 104 in bekannter Weise eine in der Figur nicht näher dargestellte Kurbelwelle je nach Verbrennungstakt antreibt oder von dieser angetrieben wird. Der Hauptbrennraum 102 des Zylinders 101 wird aus einer Ansaugleitung 105 mit dem Brenngas-Luft-Gemisch versorgt. Die Abgase verlassen den Brennraum 102 durch eine Abgasleitung 106. Zur getakteten Öffnung der Leitungen 105 und 106 sind Einlass- und Auslassventile 105a bzw. 106a vorgesehen.

Das Brenngas-Luft-Gemisch entsteht durch die Einspritzung des Brenngases in die Ansaugleitung 105 über einen Niedrigdruckinjektor 120.

Spätestens unmittelbar vor dem extern angeregten Zündvorgang befindet sich in der Vorkammer 107 ein konditioniertes Brenngas-Luft-Gemisch. Der externe Energieeintrag, der heutzutage nach wie vor über eine Zündfunke erfolgt, beschränkt sich auf das Innenvolumen der Vorkammer 107, welches wesentlich kleiner als das des Hauptbrennraums 102 ist. Das Entzünden des Brenngas-Luft-Gemisches mittels Zündfunken in der Vorkammer 107 erfolgt wesentlich definierter als es in einem um Grössenordnungen grösseren Hauptbrennraum 102 erfolgen kann. Das Innenvolumen der Vorkammer 107 ist mit dem Hauptbrennraum 102 verbunden, zumeist über mehrere Kanäle. Daher schiesst das in der Vorkammer 107 entzündete Brenngas-Luft-Gemisch in den Hauptbrennraum 102 und liefert Aktivierungsenergie zum dortigen Entzünden des Brenngas-Luft-Gemisches. Die über eine Vorkammer 107 in den Hauptbrennraum 102 eingebrachte Energie ist um ein Vielfaches höher als es mit einer anwendungstauglichen Zündkerze 108 möglich wäre.

Das Drucktanksystem 10 umfasst einen Haupttank 20 und einen Nebentank 30, wobei der Nebentank 30 ein geringeres Fassungsvolumen aufweist, als der Haupttank 20. Der das Brenngas in die Ansaugleitung 105 zuführende Niederdruckinjektor 120 steht über eine Druckleitung 22 mit dem Haupttank 20 in Verbindung, wobei an der Druckleitung 22 ein Druckminderer 23 angeordnet ist. Der das Brenngas in die Vorkammer 107 zuführende Hochdruckinjektor 130 steht über eine Hochdruckleitung 32 mit dem Nebentank 30 in Verbindung, wobei auch an der Hochdruckleitung 32 ein Druckminderer 33 angeordnet ist.

Am Haupttank 20 ist ein Anschluss 21 zur Druckbetankung mit dem Brenngas vorgesehen. Am Nebentank 30 fehlt ein derartiger Betankungsanschluss. Stattdessen sind die Tanks 20 und 30 anhand einer Verbindungsleitung 40 verbunden, in der ein Einwegventil 41 angeordnet ist. Das Rückschlagventil 41 ist so ausgebildet und gerichtet, dass ein Gasübertritt generell nur vom Haupttank 20 in den Nebentank 30 stattfinden kann. Ein solcher Gasübertritt findet dann statt, wenn der Druck im Haupttank 20 einen bestimmten Schwellenwert erreicht hat oder diesen übersteigt. Bei dem Schwellenwert handelt es sich um den soge-nannten Öffnungsdruck des Einwegventils 41.

Anhand des gezeigten, erfindungsgemäß ausgebildeten Drucktanksystems 10 kann eine effiziente Brenngasversorgung des Motors 100 unter einer weit besseren Ausnutzung des Gesamtvolumens des Drucktanksystems erfolgen.

Im Betrieb des Gasmotors 100 kann in einem Beispiel, welches typische reale Werte wiedergibt, das Brenngas am Niederdruckinjektor 120 mit einem Druck von 10 bar in die Saugleitung 105 und am Hochdruckinjektor 130 mit einem Druck von 200 bar in die aktive Vorkammer 107 eingespritzt werden. Das Verhältnis der Brenngas-Einspritzmengen zwischen Niederdruckinjektor 120 und der Gesamtmenge sämtlicher Hochdruckinjektoren 130 kann beispielsweise 95 : 5 betragen, sodass 95 % des insgesamt in das System eingespritzten Brenngases am Niederdruckinjektor 120 in die Saugleitung 105 eingespritzt werden und 5 % des insgesamt in das System eingespritzten Brenngases in die Hochdruckinjektoren 130 in die Vorkammer 107 eingespritzt werden. Folglich stellt der Nebentank 30 eine weitaus geringere Gasmenge zur Verfügung als der Haupttank 20. Allerdings kann der Nebentank 30 nur solange genutzt werden bis das in ihm verbleibene Brenngas einen Druck von 200 bar aufweist. Hingegen kann der Haupttank 30 solange genutzt werden bis das in ihm ver-bleibene Brenngas einen Druck von 50 bar aufweist. Daher kann aus dem Haupttank ein wesentlich höherer relativer Energieinhalt entnommen werden als aus dem Nebentank.

Zum Auftanken des Drucktanksystems 10 wird eine Tankleitung für komprimiertes Brenngas mit dem Druckbetankungsanschluss 21 verbunden. Sobald der Gasdruck im Haupttank 20 den Öffnungsdruck des Einwegventils 41 erreicht hat, setzt ein Gasübertritt vom Haupttank 20 in den Nebentank 30 über die Verbindungsleitung 40 ein. Bei fortdauernder Betankung werden dann beide Tanks gleichzeitig bis zur vollständigen Füllung betankt. Der Fülldruck nach Vollbetankung in den Tanks 20 und 30 kann beispielsweise 350 bar betragen.

Nach abgeschlossener Betankung und Betriebsaufnahme des Gasmotors 100 wird am Niederdruckinjektor 120 Brenngas in die Saugleitung 105 eingespritzt und am Hochdruckinjektor 130 Brenngas in die Vorkammer 107 eingespritzt. Durch den resultierenden Gasverbrauch am Niederdruckinjektor 120 sinkt der Druck im Haupttank 20 und durch den resultierenden Gasverbrauch am Hochdruckinjektor 130 sinkt der Gasdruck im Nebentank 30.

Unter Fortführung des obigen Zahlenbeispiels müsste bei einem Ein-Tank-System bereits bei einem Erreichen eines Gasdrucks im Tank von 200 bar wieder betankt werden, weil sonst dem Hochdruckinjektor 130 kein Brenngas mit einem ausreichend hohen Druckniveau zugeführt werden könnte. Durch die Versorgung der Niederdruck- und der Hochdruckeinspritzung über getrennte Tanks 20 und 30 wird erst dann ein Nachtanken erforderlich, wenn der Gasdruck im Haupttank auf 50 bar abgesunken ist oder der Gasdruck im Nebentank auf 200 bar abgesunken ist.

Über den Niederdruckinjektor 120 wird dabei aber eine deutlich höhere Gasmenge eingespritzt, wie bereits oben näher beschrieben. So würde der Druck im Haupttank 20 bei einer identischen Dimensionierung von Haupttank 20 und Nebentank 30 deutlich schneller sinken. Durch die relativ größere Dimensionierung des Haupttanks 20 wird dieser Unterschied in dem erfindungsgemäßen System verringert, wobei bei einer vorteilhaften Dimensionierung die relative Auslegung der Tanks so gewählt ist, dass der Unterschied in der Druckabnahme nicht vollständig durch eine Staffelung des Fassungsvermögens ausgeglichen wird. So sinkt auch im erfindungsgemäßen System der Druck im Haupttank 20 schneller als im Nebentank 30. Durch das Einwegventil 41 findet aber kein Druckausgleich statt, sodass der Druck im Nebentank 30 höher bleibt als im Haupttank 20. So kann der Nebentank 30 auch dann noch den höheren Druck von beispielsweise 200 bar liefern, der am Hochdruckinjektor 130 benötigt wird, wenn der Druck im Haupttank 20 längst weit unter diesen Wert abgefallen ist. Folglich kann der Haupttank 20 bis auf einen viel niedrigeren Druck von beispielsweise etwa 50 bar entleert werden, bevor das System wieder betankt werden muss. Bei einem Ein-Tank-System müsste dagegen bereits bei Erreichen der 200 bar wieder betankt werden, weil sonst dem Hochdruckinjektor 130 kein Brenngas mit einem ausreichend hohen Druckniveau zugeführt werden könnte.

Durch eine anwendungsbezogene Abschätzung der relativen Gasverbrauchswerte im Hauptbrennraum 102 und in der Vorkammer 107, die in der Realität natürlich mehr oder weniger großen Schwankungen unterworfen ist, kann die relative Größe der Tanks 20 und 30 dahingehend angepasst werden, dass diese ihre Mindestdrücke möglichst gleichzeitig erreichen, in der Tendenz aber der Haupttank 20 zuerst leer wird. Dies ist einer optimalen Nutzung des gesamten zur Verfügung stehenden Tankvolumens zuträglich, da der Haupttank 20 größer ist und einen größeren Anteil am gesamten zur Verfügung stehenden Tankvolumen aufweist.

In Bezug auf das entnehmbare Gasvorkommen, d.h. den nutzbaren Energieinhalt weist das erfindungsgemässe Drucktanksystem eine höhere volume¬tri¬sche Energiedichte auf. Der Anteil des Energieeintrags in das Drucktank-,system, der als Kompressionsenergie aufgewendet werden muss, ist für ein erfindungsgemässes Drucktanksystem niedriger.

Generell kann das Drucktanksystem derart konzipiert sein, dass lediglich ein Austausch des Haupttanks erfolgt, wohingegen alle anderen Bestandteile des Druck¬-tanksystems am Einsatzort bzw. in dem Fahrzeug verbleiben. Durch einen Austausch des entleerten gegen einen voll befüllten Haupttank füllt sich der Nebentank unmittelbar nachdem der Haupttank im Fahrzeug eingebaut und angeschlossen ist.

Sofern der von dem Haupttank versorgte Prozess eine wesentlich grössere Gasmenge als der vom Nebentank versorgte Prozess erfordert, kann ein solches Gastank-Wechsel-Konzept sehr vorteilhaft sein, da durch einen Austausch eines voll betankten Hauptanks nahezu die gleiche Gasmenge in dem Drucktanksystem vorhanden ist als wenn eine Betankung der bereits verbundenen Tanks stattgefunden hätte.

Sofern es nicht vorgesehen ist, dass das Fahrzeug nicht zu einer Tankstelle fährt, sondern das Betanken an seinem Einsatz erfolgt, was bei Mobilen Arbeitsmaschine der Fall ist, muss dort entweder ein Verdichten des Gases möglich sein oder der Gas-Transporttank kann nur soweit entladen werden bis der Maximaldruck des Drucktanksystems der Mobilen Arbeitsmaschine erreicht ist.

Ein Verdichten des Gases vor Ort der mobilen Arbeitsmaschine ist langwierig und würde unnötig lange Stillstandszeiten verursachen. Was das Verdichten des Gases anbetrifft kann dies an einem zentralen Einsatzort mit einer entsprechend gross ausgelegten Anlage weitaus praktikabler erfolgen. Wenn nun das Gas mit einem Transporttank jeweils zu der nachzutankenden Mobilen Arbeitsmaschine gebracht wird, kann der Transporttank nur soweit entladen werden bis der Maximaldruck des Drucktanksystems der Mobilen Arbeitsmaschine erreicht ist. Folglich verbleibt in dem Transporttank immer eine vergleichsweise hohe Gasmenge, die auf allen Fahrten transportiert werden muss und stets ungenutzt bleibt.

Ferner muss das Verdichten zur Befüllung der Transporttanks auf ein deutlich höheres Druckniveau erfolgen, was deutlich aufwendiger und deutlich energieintensiver ist. Besonders bevorzugt kommen bei einem solchen Gas-Tank-Wechselkonzept solche Hauttanks zum Einsatz, die bereits standardisiert sind.

Ein Gas-Tank-Wechselkonzept kann mit dem erfindungsgemässen Drucktanksystem sehr vorteilhaft umgesetzt werden und würde für solche mit Gasmotoren, die mit einer aktiven Vorkammer ausgestattet sind, betriebenen Mobile Arbeitsmaschinen, die an ihrem Einsatzort betankt werden, grosse Vorteile bieten. Daher stellt ein solches Gas-Tank-Wechselkonzept eine vorteilhafte ausgestaltung der erfindung dar.

## Patentansprüche

1. Gasmotor (100) mit wenigstens einem Zylinder (101), der einen Brennraum (102) umfasst, der mit einer Ansaugleitung (105), einer Abgasleitung (106) und einer Vorkammer (107) in Verbindung steht, und mit einem Drucktanksystem (10) zur Bereitstellung von Gasen auf wenigstens zwei unterschiedlichen Druckniveaus;
wobei das Drucktanksystem (10) einen Haupttank (20) und einen Nebentank (30) aufweist, wobei der Haupttank (20) einen Anschluss (21) für eine Druckbetankung aufweist, wobei sowohl der Haupttank (20) als auch der Nebentank (30) jeweils wenigstens eine Druckleitung (22, 32) zur Gasabgabe aufweisen, und wobei der Haupttank (20) und der Nebentank (30) anhand einer Verbindungsleitung (40) verbunden sind, in der ein Ventil (41) angeordnet ist, das ausgebildet und gerichtet ist, einen Gasübertritt vom Haupttank (20) in den Nebentank (30) zu erlauben und einen Gasübertritt in die Gegenrichtung zu unterbinden, wobei das Drucktanksystem (10) über das Ventil (41) einen Gasübertritt vom Haupttank (20) in den Nebentank (30) nur bei einer positiven Druckdifferenz zwischen Haupttank (20) und Nebentank (30) ermöglicht; und
wobei die Druckleitung (22) des Haupttanks (20) mit einem Niederdruckinjektor (120) verbunden ist, der ausgebildet und angeordnet ist, Brenngase in die Ansaugleitung (105) zuzuführen, und wobei die Druckleitung (32) des Nebentanks (30) mit einem Hochdruckinjektor (130) verbunden ist, der ausgebildet und angeordnet ist, Brenngase in die Vorkammer (107) zuzuführen.

2. Gasmotor nach Anspruch 1, **dadurch gekennzeichnet, dass** der Haupttank (20) des Drucktanksystems (10) ein größeres Fassungsvolumen als der Nebentank (30) aufweist.

3. Gasmotor nach Anspruch 2, **dadurch gekennzeichnet, dass** das Verhältnis der Fassungsvolumina von Haupttank (20) zu Nebentank (30) mindestens 8 : 2 und vorzugsweise mindestens 9 : 1 beträgt.

4. Gasmotor nach einem der vorhergehenden Ansprüche, **dadurch gekennzeichnet, dass** der maximale Fülldruck der Tanks (20, 30) des Drucktanksystems (10) mindestens 200 bar, vorzugsweise mindestens 250 bar und weiter vorzugsweise mindestens 700 bar beträgt.

5. Kraftfahrzeug mit einem Gasmotor (100) nach einem der vorhergehenden Ansprüche.

6. Kraftfahrzeug nach Anspruch 5, **dadurch gekennzeichnet, dass** es sich bei dem Kraftfahrzeug um eine mobile Arbeitsmaschine handelt.

7. Verfahren zum Betrieb eines Gasmotors (100) nach einem der Ansprüche 1 bis 4 oder eines Kraftfahrzeugs nach Anspruch 5 oder 6, **dadurch gekennzeichnet, dass** die Zündung des Brenngas-Luft-Gemischs im Brennraum (102) des Gasmotors (100) nicht direkt erfolgt, sondern indem ein Teil des im Gasmotor (100) gezündeten Brenngas-Luft-Gemischs mittels Brenngaszuführung per Hochdruckinjektor (130) in die Vorkammer (107) eingespritzt und darin mit einer Vorrichtung, die extern mit Energie versorgt wird, vorzugsweise einer Zündkerze (108), gezündet wird, wodurch dann das Brenngas-Luft-Gemisch im Brennraum (102) entzündet wird.

8. Verfahren nach Anspruch 7, **dadurch gekennzeichnet, dass** als Brenngas Wasserstoff zugeführt wird und es sich bei dem Brenngas-Luft-Gemisch um Knallgas handelt.

9. Verfahren nach Anspruch 7 oder 8, **dadurch gekennzeichnet, dass** die Gaszuführung am Niederdruckinjektor (120) bei einem Druck von zwischen 2 und 50 bar, vorzugsweise zwischen 5 und 20 bar und weiter vorzugsweise zwischen 8 und 15 bar erfolgt und/oder die Gaszuführung am Hochdruckinjektor (130) bei einem Druck von zwischen 100 und 200 bar, vorzugsweise zwischen 150 und 250 bar und weiter vorzugsweise zwischen 180 und 220 bar erfolgt.

## Claims

1. Gas engine (100) having at least one cylinder (101) comprising a combustion chamber (102) which communicates with an intake pipe (105), an exhaust pipe (106) and a pre-chamber (107) and a pressurized tank system (10) for providing gases at at least two different pressure levels;
wherein the pressurized tank system (10) comprises a main tank (20) and a secondary tank (30), wherein the main tank (20) comprises a connection (21) for pressurized refueling, wherein both the main tank (20) and the secondary tank (30) comprise in each case at least one pressure line (22, 32) for the discharge of gas, and wherein the main tank (20) and the secondary tank (30) are connected by means of a connecting line (40) in which a valve (41) is arranged which is formed and configured to allow gas to pass from the main tank (20) into the secondary tank (30) and to prevent gas from passing in the opposite direction, wherein the pressurized tank system (10) only allows gas to pass from the main tank (20) to the secondary tank (30) via the valve (41) if there is a positive pressure difference between the main tank (20) and the secondary tank (30); and
wherein the pressure line (22) of the main tank (20) is connected to a low-pressure injector (120) which is configured and arranged to supply combustion gases to the intake pipe (105) and wherein the pressure line (32) of the secondary tank (30) is connected to a high-pressure injector (130) which is configured and arranged to supply combustion gases to the pre-chamber (107).

2. Gas engine according to Claim 1, **characterized in that** the main tank (20) of the pressurized tank system (10) has a larger capacity volume than the secondary tank (30).

3. Gas engine according to Claim 2, **characterized in that** the ratio of the capacity volumes of the main tank (20) to the secondary tank (30) is at least 8:2 and preferably at least 9:1.

4. Gas engine according to any one of the preceding claims, **characterized in that** the maximum filling pressure of the tanks (20, 30) of the pressurized tank system (10) is at least 200 bar, preferably at least 250 bar and further preferably at least 700 bar.

5. Motor vehicle comprising a gas engine (100) according to any of the preceding claims.

6. Motor vehicle according to Claim 5, **characterized in that** the motor vehicle is a mobile working machine.

7. Method for operating a gas engine (100) according to any one of Claims 1 to 4 or a motor vehicle according to Claim 5 or 6, **characterized in that** the ignition of the combustion gas-air mixture in the combustion chamber (102) of the gas engine (100) does not occur directly, but by injecting a portion of the combustion gas-air mixture ignited in the gas engine (100) into the pre-chamber (107) by means of a high-pressure injector (130) and igniting it therein by means of a device, which is supplied with energy externally; preferably a spark plug (108), which then ignites the combustion gas-air mixture in the combustion chamber (102).

8. Method according to Claim 7, **characterized in that** hydrogen is supplied as fuel gas and that the fuel gas-air mixture is an oxyhydrogen.

9. Method according to Claim 7 or 8, **characterized in that** the supply of gas at the low pressure injector (120) occurs at a pressure of between 2 and 50 bar, preferably between 5 and 20 bar and further preferably between 8 and 15 bar, and/or that the supply of gas occurs at the high pressure injector (130) at a pressure of between 100 and 200 bar, preferably between 150 and 250 bar and further preferably between 180 and 220 bar.

## Revendications

1. Moteur à gaz (100) doté d'au moins un cylindre (101) qui comprend une chambre de combustion (102) reliée à une conduite d'admission (105), une conduite d'échappement (106) et une préchambre (107), et doté d'un système de réservoirs sous pression (10) pour la fourniture de gaz à au moins deux niveaux de pression différents ;
dans lequel le système de réservoirs sous pression (10) présente un réservoir principal (20) et un réservoir secondaire (30), le réservoir principal (20) présentant un raccordement (21) pour un ravitaillement sous pression, aussi bien le réservoir principal (20) que le réservoir secondaire (30) présentant chacun au moins une conduite sous pression (22, 32) pour la distribution de gaz, et le réservoir principal (20) et le réservoir secondaire (30) étant reliés au moyen d'une conduite de liaison (40) dans laquelle est disposée une soupape (41) qui est conçue et orientée de façon à permettre un passage de gaz du réservoir principal (20) au réservoir secondaire (30) et empêcher un passage de gaz dans le sens inverse, le système de réservoirs sous pression (10) permettant, par le biais de la soupape (41), un passage de gaz du réservoir principal (20) au réservoir secondaire (30) uniquement en cas de différence de pression positive entre le réservoir principal (20) et le réservoir secondaire (30) ; et
dans lequel la conduite sous pression (22) du réservoir principal (20) est reliée à un injecteur basse pression (120), qui est conçu et agencé pour introduire des gaz combustibles dans la conduite d'admission (105), et dans lequel la conduite sous pression (32) du réservoir secondaire (30) est reliée à un injecteur haute pression (130), qui est conçu et agencé pour introduire des gaz combustibles dans la préchambre (107).

2. Moteur à gaz selon la revendication 1, **caractérisé en ce que** le réservoir principal (20) du système de réservoirs sous pression (10) présente une contenance supérieure à celle du réservoir secondaire (30).

3. Moteur à gaz selon la revendication 2, **caractérisé en ce que** le rapport entre les contenances du réservoir principal (20) et du réservoir secondaire (30) est d'au moins 8 : 2 et de préférence au moins 9 : 1.

4. Moteur à gaz selon l'une des revendications précédentes, **caractérisé en ce que** la pression de remplissage maximale des réservoirs (20, 30) du système de réservoirs sous pression (10) est d'au moins 200 bar, de préférence au moins 250 bar et de préférence encore au moins 700 bar.

5. Véhicule automobile doté d'un moteur à gaz (100) selon l'une des revendications précédentes.

6. Véhicule automobile selon la revendication 5, **caractérisé en ce que** le véhicule automobile est une machine de travail mobile.

7. Procédé de fonctionnement d'un moteur à gaz (100) selon l'une des revendications 1 à 4 ou d'un véhicule automobile selon la revendication 5 ou 6, **caractérisé en ce que** l'allumage du mélange gaz combustible / air dans la chambre de combustion (102) du moteur à gaz (100) n'est pas effectué directement mais par le fait qu'une partie du mélange gaz combustible / air allumé dans le moteur à gaz (100) est injectée dans la préchambre (107) au moyen de l'introduction de gaz combustible par injecteur haute pression (130) et y est allumée au moyen d'un dispositif, qui est alimenté en énergie de manière externe, de préférence une bougie d'allumage (108), moyennant quoi le mélange gaz combustible / air est ensuite allumé dans la chambre de combustion (102).

8. Procédé selon la revendication 7, **caractérisé en ce que** de l'hydrogène est introduit comme gaz combustible et le mélange gaz combustible / air est du gaz détonant.

9. Procédé selon la revendication 7 ou 8, **caractérisé en ce que** l'introduction de gaz au niveau de l'injecteur haute pression (120) est effectuée à une pression comprise entre 2 et 50 bar, de préférence entre 5 et 20 bar et de préférence encore entre 8 et 15 bar et/ou l'introduction de gaz au niveau de l'injecteur haute pression (130) est effectuée à une pression comprise entre 100 et 200 bar, de préférence entre 150 et 250 bar et de préférence encore entre 180 et 220 bar.
